# EUROPÄISCHE PATENTSCHRIFT

(11) **EP 3 055 858 B1**
(45) Veröffentlichungstag und Bekanntmachung des Hinweises auf die Patenterteilung: **05.04.2023**
(21) Anmeldenummer: 14781572.4
(22) Anmeldetag: 09.10.2014
(51) Int. Cl.: G01S 7/521, G10K 9/22, G10K 11/00, G01F 23/296, G01S 15/88, G10K 9/122

(54) **ULTRASCHALLSENSOR**
ULTRASOUND SENSOR
CAPTEUR À ULTRASONS

(30) Priorität: 09.10.2013 DE 202013104569 U
(43) Veröffentlichungstag der Anmeldung: 17.08.2016
(73) Patentinhaber: Pepperl + Fuchs GmbH, 68307 Mannheim (DE)
(72) Erfinder: KNITTEL, Thomas, 67165 Waldsee (DE)
(74) Vertreter: Vonnemann, Gerhard
(86) Internationale Anmeldenummer: PCT/EP2014/071613
(87) Internationale Veröffentlichungsnummer: WO 2015/052269

(56) Entgegenhaltungen:
- EP-A1- 1 962 552
- DE-A1-102006 014 053
- DE-A1-102006 028 213
- DE-C1- 19 927 797
- DE-U1-202011 109 555
- JP-A- 2002 228 742

## Beschreibung

Die Erfindung betrifft einen Schall- oder Ultraschallsensor zum Senden und/oder Empfangen von Schall- oder Ultraschall mit einem von einem Boden topfförmig abgeschlossenen Gehäuse, einem elektromechanischen Wandler, vorzugsweise einem piezoelektrischen Element, zur Erzeugung und/oder Aufnahme von Schall oder Ultraschall durch den Boden hindurch.

Ultraschallsensoren werden z. B. als Sender und/oder Empfänger zur Entfernungsmessung nach dem Echolotprinzip verwendet, insb. zur Messung eines Füllstands, z. B. in einem Behälter, oder zur Messung einer Füllhöhe, z. B. in einem Gerinne oder auf einem Förderband.

Ein vom Schall- oder Ultraschallsensor ausgesendeter Impuls wird an der Oberfläche eines Objekts oder eines Füllgutes reflektiert. Die Laufzeit des Impulses vom Sensor zur Oberfläche und zurück wird ermittelt und daraus die Entfernung oder der Füllstand bzw. die Füllhöhe bestimmt.

Derartige Schall- oder Ultraschallsensoren werden in vielen Industriezweigen, z. B. in der Prozess- und Automatisierungstechnik, der Lebensmittelindustrie, der Wasser- und Abwasserbranche und in der Chemie, eingesetzt.

Ultraschall-Sensoren mit der zugehörigen Ansteuerungs- und Auswerteelektronik erlauben nicht nur in einfacher Weise, den Abstand zu ermitteln sondern können auch den Volumendurchfluss und/oder Massendurchfluss in einer Rohrleitung zu bestimmen. Die bekannten Ultraschall-Sensoren arbeiten dabei häufig nach dem Doppler- oder nach dem Laufzeitdifferenz-Prinzip.

Ultraschallsensoren bestehen normalerweise aus einem elektromechanischen Wandler. In der industriellen Prozessmesstechnik wird meist eine Piezokeramik ggf. mit einer Koppelschicht eingesetzt. Die Koppelschicht ist dabei meist aus Kunststoff gefertigt. Im elektromechanischen Wandlerelement werden die Ultraschallwellen erzeugt und über die Koppelschicht zu einer Membran geführt und von dort in ein Medium, z.B. Luft oder Flüssigkeit geleitet und/oder auf ein Objekt gerichtet. Da die Schallgeschwindigkeiten in Flüssigkeiten und Kunststoffen unterschiedlich sind, werden die Ultraschallwellen beim Übergang von einem zum anderen Medium gebrochen.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals bei gleichzeitiger Reduktion von Reflektion an Grenzschichten zwischen zwei Materialen.

Aus der DE 102 16 037 A1 ist ein Schall- oder Ultraschallsensor bekannt, der eine Abstrahlcharakteristik mit einem vorzugsweise geringen Öffnungswinkel aufweist und der möglichst wenig Störsignale erzeugt, mit einem von einem Boden topfförmig abgeschlossenen Gehäuse, einem piezoelektrischen Element zur Erzeugung und/oder Aufnahme von Schall oder Ultraschall durch den Boden hindurch, einer Anpaßschicht zwischen dem piezoelektrischen Element und dem Boden und einem metallischen Ring, der die Anpaßschicht formschlüssig umgreift.

Weitere Schall- oder Ultraschallsensoren sind aus der DE 10 2006 028213 A1, DE 199 27 797 C1, DE 10 2006 014053 A1, EP 1 962 552 A1, DE 20 2011 109555 U1, und JP 2002 228742 A bekannt.

In fast allen Anwendungsbereichen ist es erforderlich, daß die Sensoren eine Abstrahlcharakteristik mit einem geringen Öffnungswinkel einer Hauptschallkeule und gleichzeitig geringen Nebenschallkeulen aufweisen. Der Öffnungswinkel der Hauptschallkeule des Sensor ist im wesentlichen durch den Durchmesser der Frontfläche und die Frequenz bestimmt.

Zusätzlich gilt es aber auch Schall- oder Ultraschallschwingungen von seitlichen Gehäuseteilen fern zu halten. Zum Einen können bei einem Mitschwingen der Gehäusewand von dieser selbst Schall- oder Ultraschallimpulse ausgesendet und empfangen werden. Dies kann zu Störechos führen. Zum Anderen kann der Schall- oder Ultraschall auch als Körperschall auf das Gehäuse und darüber auf eine Halterung des Sensors und gegebenenfalls sogar auf weitere Bauteile am Einsatzort übertragen werden. Dies kann ebenfalls zu erheblichen Störsignalen führen. Prinzipiell ist von diesem Problem jeder Ultraschallsensor betroffen. Beim Stand der Technik wird der eigentliche Schallwandler, der aus einer Piezokeramik und aus einer akustischen Impedanzanpassungsschicht besteht, durch einen Dämpfungsschaum akustisch vom Gehäuse isoliert.

Bei dem Einsatz von Sensoren ist also deren Größe, Form und Aufbau von Bedeutung, um sie schnell und sicher auch an schwer zugänglichen Stellen von Anlagen befestigen zu können und dabei auswertbare Signale zu erhalten. Die Haltevorrichtungen sind dabei so ausgestaltet, dass eine möglichst universelle dauerhafte und leicht einstellbare Befestigung der Sensoren möglich ist. Besonders bei einem Einsatz in Anlagen der Lebensmittelindustrie oder der Pharmazie sollen die Sensoren auch leicht zu reinigen und zu desinfizieren sein und Mikroorganismen keine Möglichkeit zur Besiedelung an schwer zugänglichen Orten ermöglichen. Um die Sensoren vor mechanischen Einflüssen von außen zu schützen sind teilweise separat anzubringende Schutzgehäuse vorgesehen. Gleichzeitig sind die Sensoren in ihren Messpositionen durch zusätzliche mechanische Bauteile festgestellt. Diese Feststellung ist separat zu lösen, bevor eine Verstellung vorgenommen werden kann.

Die Aufgabe der Erfindung besteht darin, einen Ultraschallsensor bereit zu stellen, der besonders für die Lebensmittelindustrie geeignet ist, leicht zu reinigen ist und eine universell einsetzbare kleine Bauform besitzt.

[A001] Die Aufgabe wird durch einen Schall- oder Ultraschallsensor zum Senden und/oder Empfangen von Schall- oder Ultraschall mit einem von einem Boden topfförmig abgeschlossenen Gehäuse, einem elektromechanischen Wandler, vorzugsweise einem piezoelektrischen Element, zur Erzeugung und/oder Aufnahme von Schall oder Ultraschall durch den Boden hindurch, entsprechend der Merkmale des unabhängigen Anspruchs 1 gelöst, wobei das Gehäuse in ein Befestigungsteil und ein Funktionsteil gegliedert ist, die mittels eines Elastomerteils zusammengefügt sind. Der Befestigungsteil ist dadurch hygienisch ohne Spalt, also spaltfrei, vom Funktionsteil mechanisch durch das Elastomerteil verbunden, und gleichzeitig auch von den Schwingungen im Funktionsteil mechanisch entkoppelt. Das Elastomerteil wird vorteilhaft an mindestens ein Gehäuseteil oder an beide Gehäuseteile angespritzt, so dass es spaltfrei die Gehäuseteile verbindet. Mikroorganismen haben keine Ansatzmöglichkeiten in etwaigen Spalten Nester zu bilden. Der Sensor lässt sich vorteilhaft einfach und gründlich reinigen. Die Gehäuseteile werden bevorzugt aus rostfreiem Stahl gefertigt.

Das aktive Gehäuseteil weist zudem einen Ringabschnitt auf, der einen Wandabschnitt des passiven Gehäuseteils überlappend ausgebildet ist. Im Überlappungsbereich entsteht ein Umfangsspalt, der vom Elastomerteil mindestens teilweise ausgefüllt werden kann. Das Elastomerteil kann dadurch zu den vom Elastomerteil gefügten Gehäuseteilen relativ große Kontaktflächen ausbilden, die eine sichere Abdichtung des Gehäuseinneren zur Umgebung gewährleisten. Auch die Fügestelle gewinnt dadurch an mechanischer Festigkeit.

Die mechanische Festigkeit lässt sich weiter steigern, indem das Elastomerteil formschlüssig mit dem aktiven Funktionsteil und/oder passiven Befestigungsteil verbunden ist. Der Formschluß, d.h. die Steigerung der mechanischen Festigkeit, kann beispielsweise dadurch erreicht werden, indem im Überlappungsbereich radiale Bohrungen in den gefügten Gehäuseteile vorgesehen werden. Beim Einspritzen der Elastomermasse werden die Bohrungen von der Masse durchdrungen und verbinden dadurch formschlüssig die Gehäuseteile.

Das passive Gehäuseteil dient dabei der Befestigung des Sensors und wird daher auch als Befestigungsteil bezeichnet, während das aktive Gehäuseteil die Funktion des Sensors bestimmt und deshalb auch als Funktionsteil bezeichnet wird.

Erfindungsgemäß ist vorgesehen, dass der elektromechanische Wandler von dem Boden und von einem, vorzugsweise metallischen, Abschirmbecher umschlossen ist. Der Wandler wird nach außen durch eine vorteilhaft aus rostfreiem Stahl bestehende Membran als Boden des aktiven Gehäuseteils geschützt. Nach innen wird der Wandler durch den Abschirmbecher begrenzt.

Erfindungsgemäβ sind das Fuktionsteil und das Befestigungsteil als ineinanderfügbare Rohrabschnitte ausgebildet, die koaxial angeordnet sind und einen Umfangsspalt bilden, in dem das Elastomerteil vorgesehen ist. Diese Bauform ist vorteilhaft schlank bei besonders geringer zu reinigender Oberfläche. Ein rohrförmiges Gehäuse läßt sich auch leichter in Anlagen integrieren. Das Elastomerteil entkoppelt dabei das aktive Gehäuseteil von dem der Befestigung dienenden passiven Gehäuseteil.

In einer Ausgestaltung sind das aktive Funktionsteil und das passive Befestigungsteil axial hintereinander angeordnet und weisen vorzugsweise denselben Durchmesser auf, wobei das Elastomerteil zwischen Funktionsteil und Befestigungsteil angeordnet ist. Die äußere Oberfläche weist dadurch keine Hohlkehlen, Ecken oder Sprünge auf, in denen Mikroorganismen nisten könnten.

In weiterer Ausgestaltung ist der Abschirmbecher als Teil des Funktionsteils oder vom Funktionsteil umschlossen ausgebildet. Die Wand des Abschirmbechers kann also entweder gleichzeitig die äußere Oberfläche des Funktionsteil bilden oder wird von einem zylindrischen Wandteil des Funktionsteils am Umfang überdeckt.

Erfindungsgemä+ß ist das Elastomerteil des Sensors transparent ausgebildet. Außerdem weist der Sensor eine elektronische Baugruppe mit Leuchtmitteln, vorzugsweise mindestens einer Leuchtdiode, auf, deren emittiertes Licht durch das Elastomerteil sichtbar ist.

Nicht nur optisch gewinnt der Sensor, wenn das Elastomerteil transparent ausgebildet ist. Es lässt sich auch eine Statusanzeige des Sensors mit in das Gehäuse integrieren. Eine solche optische Statusanzeige lässt sich ohne zusätzliche Gehäusefugen vorsehen, wenn der Sensor eine elektronische Baugruppe mit Leuchtmitteln, vorzugsweise mindestens einer Leuchtdiode, aufweist, deren emittiertes Licht durch das Elastomerteil sichtbar ist.

Die Maßnahme, dass das Befestigungsteil einen abgeteilten Ringabschnitt aufweist, der mit dem Funktionsteil und mit dem Elastomerteil als eine Baugruppe ausgebildet ist, erleichtert die Herstellung, Montage und innere Verdrahtung des Sensors.

Die Erfindung ist primär für Ultraschallsensoren gedacht, weil bei ihnen das Problem existiert, dass sich die akustische Schwingung beim Senden und Empfangen auf das Gehäuse des Sensors überträgt. Ist dies der Fall, kann sich die Schwingung über die mechanische Halterung des Sensors auch auf die Einbauumgebung, z.B. das Maschinenbett, übertragen. Die Schwingung kann in den Empfangsphasen, d.h. den Sendepausen, wieder auf den Ultraschallwandler zurückkoppeln und ein Störsignal verursachen. Dadurch reduziert sich der Signal-Rauschabstand bzw. der Nahbereich des Sensors wird vergrößert.

Denkbar wäre der Einsatz der Erfindung im Zusammenspiel auch mit anderen Ultraschallwandlerbauformen, bei denen das Körperschallproblem vorhanden ist. Dies sind z.B.:Biegeschwinger mit metallischem oder keramischen, becherförmigen Gehäuse und einer auf den Gehäuseboden geklebten Piezokeramik oder Sensoren, bei denen Sendewandler und Empfangswandler getrennt ausgeführt sind
Besonders geeignet und leicht umsetzbar ist die Erfindung für zylindrische Ultraschallsensoren. Es ist aber auch ein Einsatz bei quaderförmigen Gehäusen denkbar.

Eine bevorzugte Ausführungsform der Erfindung wird beispielhaft an Hand einer Zeichnung erläutert. Die Figuren der Zeichnung zeigen im Einzelnen:
- Figur 1: einen schematischen Axialschnitt durch einen erfindungsgemäßen rotationssymmetrischen Sensor in einer ersten Ausführungsform,
- Figur 2: einen schematischen Axialschnitt durch einen erfindungsgemäßen rotationssymmetrischen Sensor in einer zweiten Ausführungsform,
- Figur 3: einen Axialschnitt durch das in Figur 2 dargestellte Funktionsteil,
- Figur 4: eine erste persepektivische Ansicht des Funktionsteils gemäß Figur 3 und
- Figur 5: eine zweite persepektivische Ansicht des Funktionsteils gemäß Figur 3.

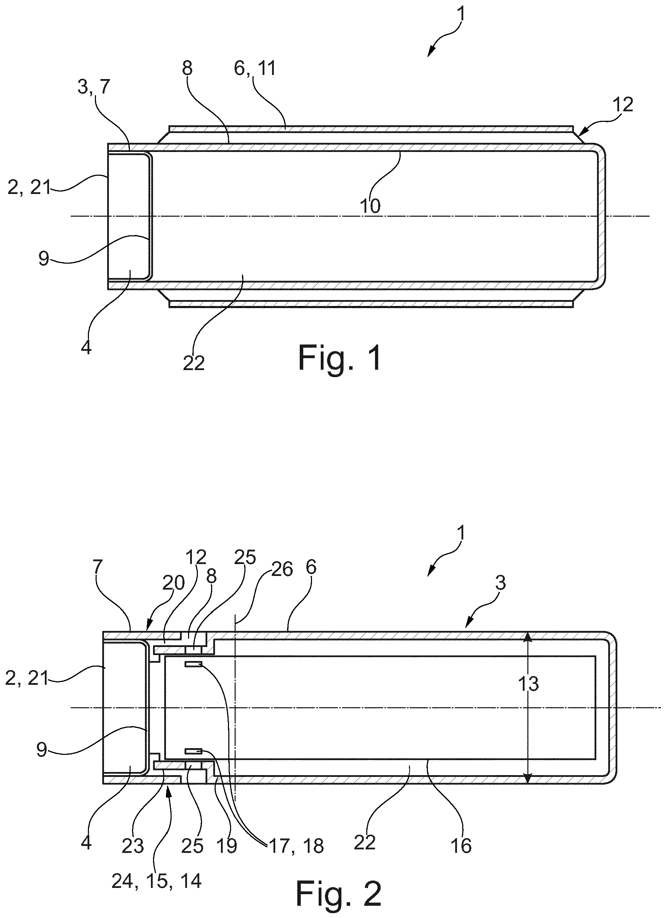

In den Figuren 1 bis 5 bezeichnet die Bezugsziffer 1 den erfindungsgemäßen Schall- oder Ultraschallsensor 1 zum Senden und/oder Empfangen von Schall- oder Ultraschall mit einem von einem Boden 2 topfförmig abgeschlossenen Gehäuse 3, einem elektromechanischen Wandler 4, vorzugsweise einem piezoelektrischen Element 5, zur Erzeugung und/oder Aufnahme von Schall oder Ultraschall durch den Boden 2 hindurch.

In Figur 1 ist eine erste Ausführungsform des erfindungsgemäßen Sensors 1 dargestellt. Das zylindrisch geformte Gehäuse 3 wird auf der linken Seiten von einer den Boden 2 bildenden Membran 21 abgeschlossen. Gehäuse 3 und Membran 21 sind aus Edelstahl gefertigt. An die Membran 21 schließt sich nach rechts der elektromechanische Wandler 4 zur Schallerzeugung an. Zum Gehäuseinnenraum 22 bildet ein Abschirmbecher 9 den Abschluss des Wandlers 4.

Die zum Senden und Empfangen des Signals notwendige Elektronik ist der Übersichtlichkeit wegen in Figur 1 nicht dargestellt. Auch die notwendigen elektrischen Signal- und Versorgungsleitungen sind in den Figuren 1 bis 5 weggelassen.

Zur mechanischen Entkopplung des Gehäuses 3 gegenüber der Umgebung ist ein innerer zylindrischer Rohrabschnitt 10 des Gehäuses 3 von einem ebenfalls äußeren Rohrabschnitt 11, dem Befestigungsteil 6, mit Abstand umgeben. Das Gehäuse 3 wird somit durch ineinanderfügbare Rohrabschnitte gebildet, die koaxial angeordnet sind und einen Umfangsspalt bilden, in dem das Elastomerteil eingespritzt ist. Der Zwischenraum zwischen dem Befestigungsteil 6 und dem zu isolierenden Funktionsteil 7 wird von dem gespritzten Elastomerteil 8 ausgefüllt. Der Sensor lässt sich zur Befestigung am Befestigungsteil 6 spannen.

In Figur 2, die eine alternative Ausführungsform zeigt, ist das Gehäuse 3 des Sensors 1 zwar ebenfalls zylindrisch ausgebildet, weist aber In dieser Ausgestaltung das Gehäuse durchgehend denselben Durchmesser 13 auf. Das zuvor beschriebene Elastomerteil 8, das den Funktionsteil 7 vom Befestigungsteil 6 entkoppelt, ist sowohl axial als auch radial zwischen dem Funktionsteil 7 und dem Befestigungsteil 6 eingefügt.

Das Befestigungsteil 6 ist an seinem linken offenen Ende 23 im Durchmesser verjüngt, so dass es in einem Bereich 24 in das Funktionsteil 7 hineinreicht und der Wandabschnitt 15 den Funktionsteil 7 überlappt. Der entstandene Zwischenraum bildet einen Umfangsspalt 12, der von dem ringförmigen transparenten Elastomerteil 8 ausgefüllt ist.

Dieses Elastomerteil wird in den Zwischenraum durch Einspritzen einer thermoplastischen Elastomermasse unter Verwendung geeigneter Werkzeuge hergestellt. Das Elastomerteil 8 verbindet dann gleichzeitig das Funktionsteil und das Befestigungsteil als Klebung. Zusätzlich wird auch eine formschlüssige Verbindung erreicht, weil Bohrungen 25 in einem oder in beide Teile 6 und 7 eingebracht sind, in die während des Spritzvorgangs die thermoplastische Elastomermasse eindringt.

Zur vereinfachten Fertigung ist das Befestigungsteils 6 noch an der Fügestelle 26 geteilt, so dass ein Ringabschnitt 19 entsteht, der zusammen mit dem Elastomerteil 8, Funktionsteil 7 und Wandler 4 eine Baugruppe 20 bildet, die erst nach Kontaktierung des Wandlers 4 mit einer elektronischen Baugruppe 16 mit dem restlichen Befestigungsteil 6 zusammengefügt wird.

Im Innenraum 22 des Befestigungsteils 6 ist die in Figur 2 schematisch angedeutete Platine einer elektronische Baugruppe 16 angeordnet. Unter anderem sind auf ihr auch Leuchtdioden 18 als Leuchtmittel 17 vorgesehen. Durch die LEDs 18 kann beispielsweise der Schaltzustand des Sensors signalisiert werden. Da das Elastomerteil 8 transparent ist, kann das Licht der LED17 durch die Bohrung 25 und das Elastomerteil 8 nach außen dringen und dort durch dieses Anzeigefenster am Ende des Befestigungsteils wahrgenommen werden.

Wenn axial mehrere Ringabschnitte in analoger Weise seriell hintereinander angeordnet werden, können auch mehrere unterschiedliche Schaltzustände angezeigt werden und es wird eine noch bessere Entkopplung erzielt.

Besser ist jedoch eine farbliche Unterscheidung von Schaltzuständen durch Einsatz von unterschiedlich farbiger LEDs.

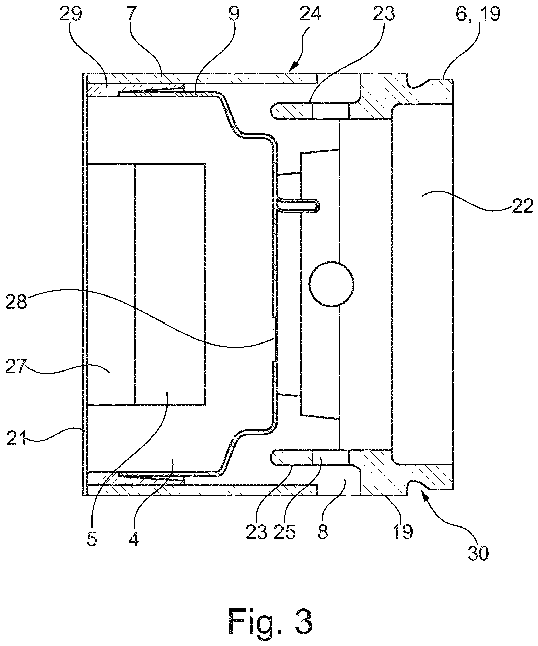

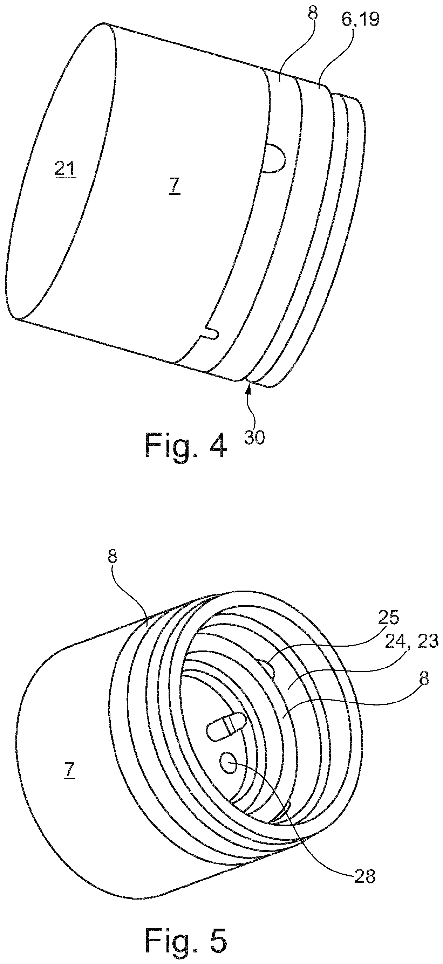

Die zuvor beschriebene Baugruppe 20 ist in Figur 3 detaillierter als Schnitt gezeigt. Die Figuren 4 und 5 zeigen dazu perspektivische Ansichten aus verschiedenen Richtungen.

Der Schallwandler 4 wurde insbesondere für den Lebensmittelbereich entwickelt, bei dem die akustisch aktive Fläche aus einer Membran 21 aus Edelstahl besteht. Die Dicke der Membran 21 liegt zwischen 50 µm und 20 µm. Der eigentliche Schallwandler 4 besteht aus einem piezoelektrischen Element 5 und einer akustischen Anpassungsschicht 27, die auf die Innenseite der Edelstahlmembran geklebt ist. Die Membran leitet den Schall sehr gut und fungiert als Schallbrücke. Deshalb besteht eine besonders große Gefahr von Störsignalen. Zum Gehäuseinnenraum 22 wird der Wandler 4 von dem Abschirmbecher 9 getrennt, der eine Öffnung 28 aufweist, durch die nicht dargestellte Leitungen zum Piezoelement 5 geführt werden können.

Zur Halterung des Abschirmbechers 9 im Funktionsteil 7 ist noch ein Haltering 29 eingefügt, der die Brücke zum Funktionsteil 7 bildet. Vom Befestigungsteil 6 ist nur der Ringabschnitt 19 mit Ringnut 30 sichtbar, die als Schweißstelle oder Walzvertiefung zur Befestigung des restlichen Befestigungsteils 6 dient.

Das Befestigungsteil dient somit der Befestigung des Sensors, während das aktive Gehäuseteil die Funktion des Sensors übernimmt.

### Bezugsziffernliste

1. Ultraschallsensor
2. Boden
3. Gehäuse
4. Wandler
5. Piezoelektrisches Element
6. Befestigungsteil
7. Funktionsteil
8. Elastomerteil
9. Abschirmbecher
10. Innerer Rohrabschnitt
11. Äußerer Rohrabschnitt
12. Umfangspalt
13. Durchmesser
14. Ringabschnitt
15. Wandabschnitt
16. elektronische Baugruppe
17. Leuchtmittel
18. Leuchtdiode
19. Ringabschnitt
20. Baugruppe
21. Membran
22. Gehäuseinnenraum
23. Ende Befestigungsteil
24. Bereich
25. Bohrung
26. Fügestelle
27. akustische Anpassungsschicht
28. Öffnung
29. Haltering
30. Ringnut

## Patentansprüche

1. Schall- oder Ultraschallsensor (1) zum Senden und/oder Empfangen von Schall- oder Ultraschall mit einem von einem Boden (2) topfförmig abgeschlossenen Gehäuse (3), einem elektromechanischen Wandler (4), vorzugsweise einem piezoelektrischen Element (5), zur Erzeugung und/oder Aufnahme von Schall oder Ultraschall durch den Boden (2) hindurch, wobei das Gehäuse (3) in ein Befestigungsteil (6) zur Befestigung des Sensors (1) und ein Funktionsteil (7) gegliedert ist, wobei Funktionsteil (7) und Befestigungsteil (6) mittels eines Elastomerteils (8) zusammengefügt sind, **dadurch gekennzeichnet, dass** der elektromechanische Wandler (4) von dem Boden (2) und von einem, vorzugsweise metallischen, Abschirmbecher (9) umschlossen ist, wobei das Funktionsteil (7) und das Befestigungsteil (6) als ineinanderfügbare Rohrabschnitte (10, 11) ausgebildet sind, die koaxial angeordnet sind und einen Umfangsspalt (12) bilden, in dem das Elastomerteil (8) vorgesehen ist, wobei das Elastomerteil (8) transparent ausgebildet ist und wobei der Sensor (1) eine elektronische Baugruppe (16) mit Leuchtmitteln (17), vorzugsweise mindestens eine Leuchtdiode (18), aufweist, deren emittiertes Licht durch das Elastomerteil (8) sichtbar ist.

2. Schall- oder Ultraschallsensor nach Anspruch 1, **dadurch gekennzeichnet, dass** das Funktionsteil (7) und das Befestigungsteil (6) axial hintereinander angeordnet sind und vorzugsweise denselben Durchmesser (13) aufweisen, wobei das Elastomerteil (8) zwischen Funktionsteil (7) und Befestigungsteil (6) angeordnet ist.

3. Schall- oder Ultraschallsensor nach Anspruch 1 oder 2, **dadurch gekennzeichnet, dass** der Abschirmbecher (9) als Teil des Funktionsteils (7) ausgebildet ist oder dass der Abschirmbecher (9) vom Funktionsteil (7) umfänglich umschlossen ist.

4. Schall- oder Ultraschallsensor nach Anspruch 1 oder 2, **dadurch gekennzeichnet, dass** das Funktionsteil (7) einen Ringabschnitt (14) aufweist, der als ein Wandabschnitt (15) des Befestigungsteils (6) überlappend ausgebildet ist.

5. Schall- oder Ultraschallsensor nach Anspruch 1 oder 2, **dadurch gekennzeichnet, dass** das Elastomerteil (8) formschlüssig mit dem Funktionsteil (7) und/oder Befestigungsteil (6) verbunden ist.

6. Schall- oder Ultraschallsensor nach Anspruch 1 oder 2, **dadurch gekennzeichnet, dass** das Befestigungsteil (6) einen abgeteilten Ringabschnitt (19) aufweist, der mit dem Funktionsteil (7) und mit dem Elastomerteil (8) als eine Baugruppe (20) ausgebildet ist.

## Claims

1. Sound or ultrasound sensor (1) for transmitting and/or receiving sound or ultrasound, having a housing (3) which is closed off in a pot-shaped manner by a base (2), an electromechanical transducer (4), preferably a piezoelectric element (5), for generating and/or receiving sound or ultrasound through the base (2), wherein the housing (3) is divided into a fastening part (6) for fastening the sensor (1) and a functional part (7), wherein the functional part (7) and the fastening part (6) are joined together by means of an elastomer part (8), **characterized in that** the electromechanical transducer (4) is enclosed by the base (2) and by a preferably metallic, shielding can (9), wherein the functional part (7) and the fastening part (6) are formed as nestable tube sections (10, 11) which are arranged coaxially and form a circumferential gap (12) in which the elastomer part (8) is provided, the elastomer part (8) being transparent, and the sensor (1) having an electronic assembly (16) with light-emitting means (17), preferably at least one light-emitting diode (18), whose emitted light is visible through the elastomer part (8).

2. Sound or ultrasonic sensor according to claim 1, **characterized in that** the functional part (7) and the fastening part (6) are arranged axially one behind the other and preferably have the same diameter (13), the elastomer part (8) being arranged between the functional part (7) and the fastening part (6).

3. Sound or ultrasonic sensor according to claim 1 or 2, **characterized in that** the shielding cup (9) is formed as part of the functional part (7) or that the shielding cup (9) is circumferentially enclosed by the functional part (7).

4. Sound or ultrasonic sensor according to claim 1 or 2, **characterized in that** the functional part (7) has a ring portion (14) overlapping as a wall portion (15) of the mounting part (6).

5. Sound or ultrasonic sensor according to claim 1 or 2, **characterized in that** the elastomer part (8) is positively connected to the functional part (7) and/or fastening part (6).

6. Sound or ultrasonic sensor according to claim 1 or 2, **characterized in that** the fastening part (6) has a separated ring section (19) which is formed as an assembly (20) with the functional part (7) and with the elastomer part (8).

## Revendications

1. Capteur sonique ou ultrasonique (1) pour l'émission et/ou la réception de sons ou d'ultrasons avec un boîtier (3) en forme de pot fermé par un fond (2), un transducteur électromécanique (4), de préférence un élément piézoélectrique (5), pour générer et/ou enregistrer des sons ou ultrasons à travers le fond (2), le boîtier (3) étant divisé en une partie de fixation (6) pour fixer le capteur (1) et une partie fonctionnelle (7), la partie fonctionnelle (7) et la partie de fixation (6) étant assemblées au moyen d'une partie élastomère (8), **caractérisé en ce que** le transducteur électromécanique (4) est entouré par le fond (2) et par une coupelle de blindage (9) de préférence métallique, la partie fonctionnelle (7) et la partie de fixation (6) étant réalisées sous forme de sections de tube (10, 11) pouvant être insérée l'une dans l'autre qui sont disposées coaxialement et forment une fente périphérique (12), la partie élastomère (8) étant transparente et le capteur (1) présentant un module électronique (16) avec des moyens d'éclairage (17), de préférence au moins une diode électroluminescente (18), dont la lumière émise est **visible** à travers la partie élastomère (8).

2. Capteur sonique ou ultrasonique selon la revendication 1, **caractérisé en ce que** la partie fonctionnelle (7) et la partie de fixation (6) sont disposées axialement l'une derrière l'autre et ont de préférence le même diamètre (13), la partie élastomère (8) étant disposée entre la partie fonctionnelle (7) et la partie de fixation (6).

3. Capteur sonique ou ultrasonique selon la revendication 1 ou 2, **caractérisé en ce que** la coupelle de blindage (9) est conçue comme élément de la partie fonctionnelle (7) ou que la coupelle de blindage (9) est circonférenciellement entourée par la partie fonctionnelle (7).

4. Capteur sonique ou ultrasonique selon la revendication 1 ou 2, **caractérisé en ce que** la partie fonctionnelle (7) présente une section annulaire (14) réalisée de façon chevauchante sous forme d'une section de paroi (15) de la partie de fixation (6).

5. Capteur de son ou d'ultrasons selon la revendication 1 ou 2, **caractérisé en ce que** la partie élastomère (8) est reliée par complémentarité de forme avec la partie fonctionnelle (7) et/ou la partie de fixation (6).

6. Capteur sonique ou ultrasonique selon la revendication 1 ou 2, **caractérisé en ce que** la partie de fixation (6) présente une section annulaire divisée (19) réalisée pour former un ensemble (20) avec la partie fonctionnelle (7) et la partie élastomère (8).
